# EUROPEAN PATENT SPECIFICATION

(11) **EP 2 219 465 B1**
(45) Date of publication and mention of the grant of the patent: **13.04.2016**
(21) Application number: 08851815.4
(22) Date of filing: 03.11.2008
(51) Int. Cl.: A23C 11/10, A23J 3/16, A23L 11/30, A23L 33/17

(54) **FERMENTED SOY-BASED BEVERAGE**
AUF FERMENTIERTEM SOJA BASIERENDES GETRÄNK
BOISSON FERMENTÉE À BASE DE SOJA

(30) Priority: 23.11.2007 EP 07121395
(43) Date of publication of application: 25.08.2010
(73) Proprietor: Unilever N.V., 3013 AL Rotterdam (NL); Unilever PLC, London EC4Y 0DY (GB)
(72) Inventor: BATENBURG, Amir, M, NL-3133 AT Vlaardingen (NL); BECKMANN, Christoph, H, NL-3133 AT Vlaardingen (NL); KLOOSTER, Jan, R, NL-3133 AT Vlaardingen (NL); MELLEMA, Michel, NL-3133 AT Vlaardingen (NL); SANDERS, Jan, W, NL-3133 AT Vlaardingen (NL)
(74) Representative: Askew, Sarah Elizabeth
(86) International application number: PCT/EP2008/064865
(87) International publication number: WO 2009/065723

(56) References cited:
- MURTI T W ET AL: "BACTERIAL GROWTH AND VOLATILE COMPOUNDS IN YOGHURT-TYPE PRODUCTS FROM SOYMILK CONTAINING BIFIDOBACTERIUM SSP" JOURNAL OF FOOD SCIENCE, INSTITUTE OF FOOD TECHNOLOGISTS, CHICAGO, IL, US, vol. 58, no. 1, January 1993 (1993-01), pages 153-157, XP000356108 ISSN: 0022-1147
- BLAGDEN TRENNA D ET AL: "Reduction of levels of volatile components associated with the "Beany" flavor in soymilk by Lactobacilli and Streptococci" JOURNAL OF FOOD SCIENCE, vol. 70, no. 3, April 2005 (2005-04), pages M186-M189, XP002471713 ISSN: 0022-1147

## Description

### Field of the Invention

The present invention relates to the field of fermented (or cultured) soy-containing products, especially fermented soy-based beverages.

### Background of the invention

Consumers have become more knowledgeable about protein and its role in a healthy diet. This new understanding has had a profound effect, stimulating consumer interest and demand for healthier beverages that are fortified with protein. Because beverages are a convenient way to incorporate protein into the diet, manufacturers continue to formulate new products in an effort to make protein more accessible to a wider group of consumers.

The two most popular beverage proteins are milk protein and soy protein, and their various isolate derivatives. According to the U.S. Food and Drug Administration, the consumption of food products rich in soy protein can reduce cholesterol, enhance athletic performance, and even aid in the battle against diabetes. In addition, interest for milk replacement by soy protein has increased in view of, on the one hand, issues in relation to over-sensitivity and/or intolerance towards milk constituents experienced by growing numbers of consumers and, on the other hand, elevated milk protein prices and supply issues that some manufacturers are experiencing relative to this commodity. Soy proteins have been proposed to replace milk proteins, either partially or totally, depending on the system, and dairy-like products have been developed based entirely on soy protein.

In view of soy protein's documented health benefits it is desirable to incorporate substantial quantities of soy protein in beverages. However, incorporation of soy protein into e.g. beverages presents several challenges. The incorporation of soy protein in beverages is known to impart a noticeable aftertaste and a distinctive "beany" taste. Different types of processes to isolate soy protein have been proposed which aim to remove these undesirable (off-) flavour-notes. Unfortunately, however, it is almost impossible to completely remove the typical soy "off-notes" from sources of soy protein such as soy concentrates and soy isolates. In addition, in most product applications the intensity of soy off-notes increases during processing and storage, probably as a result of the formation of off-flavour compounds from precursor molecules.

US 3,364,034 describes a method for removing characteristic flavour and/or odour from vegetable protein materials to provide a substantially bland product, comprising: inoculating said protein materials with bacteria selected from the group consisting of *Lactobacillus lactis, Lactobacillus bulgaricus, Lactobacillus acidophilus, Leuconostoc citrovorum, Pediococcus cerivisiae, Pseudomonas ovalis, Pseudomonae fragi, Aerobacter aerogenes, Streptococcus lactis,* incubating for 16-144 hours under conditions conducive to bacterial growth; and terminating said bacterial growth after said material is rendered substantially bland.

US 4,664,919 describes a process for producing yogurt-like food, comprising fermenting soy milk with *Streptococcus sojalactis.* It is observed in the US patent that the yogurt-like food so obtained does not have peculiar 'green' smell of soy milk and that it has a good taste. It is further stated that the aforementioned *Streptococcus* strain is capable of removing the 'green' smell of soybeans and that the amount of diacetyl and acetone formed is larger than that of other lactic acid bacteria. Data provided about the *Streptococcus sojalactis* show that the micro-organism is capable of growing at temperatures in the range of 30-40 °C, but not at 20°C or less or at temperatures of 45 °C or higher.

US 6,599,543 relates to process for preparing a fermented soybean milk comprising: contacting dehulled and dehypocotyl whole soybeans with warm or hot water; removing warm or hot water-soluble component from the soybeans; pulverizing the soybeans to make a slurry; removing insoluble component from the slurry to make a soybean milk, inoculating a lactic acid bacterium of the genus *Bifidobacterium, Lactobacillus bulgaricus* and one strain selected from the group consisting of *Lactobacillus acidophilus* and *Lactobacillus casei* into the soybean milk, adding one or more saccharides which can be utilized by the lactic acid bacterium to the soybean milk, and fermenting the soybean milk to produce the fermented soybean milk. The removal of hypocotyl from the soybeans as taught by US 6,599,543 is laborious and costly.

EP-A 0 386 817 describes a process of preparing a fermented soymilk, which comprises the steps of:
a) inoculating soymilk with an exocellular polysaccharide-forming lactic acid bacterium;
b) incubating the inoculated soymilk; and
c) recovering the fermented product.

Example 1 of the European patent application describes how 100 ml of soybean milk containing 0.5 wt.% of a added lactose was fermented with a culture of exocellular polysaccharide-forming lactic acid bacteria (*Streptococcus cremoris*) for 15 hours at 25°C, after which the pH had dropped to 4.6. After fermentation, a product was obtained with a highly viscous consistency and practically no beany flavour.

EP-A 1 145 648 describes a method of preparing a lactic acid fermented soy proteinaceous food ingredient with reduced levels of flatulence inducing oligosaccharides and conserved levels of isoflavones, said method comprising:
a) providing an aqueous crude soy material containing soy protein, flatulence-inducing oligosaccharides, and isoflavones; and
b) simultaneously treating the aqueous crude soy material with (1) a source of glycosidase activity that is effective to hydrolyze the flatulence-inducing oligosaccharides to fermentable saccharides and (2) a lactic acid producing culture that ferments the fermentable saccharides.

Example 2 describes how a 30% solids slurry of defatted soy flour in water was simultaneously inoculated with about 5 percent of a lactic acid culture (mixture of *Lactococus lactis* and *Streptococcus cremoris*) and about 0.01 percent of α-galactosidase enzyme. The inoculated slurry was held at 35 °C for 4 hours, during which time the pH dropped from 6.6 to 5.3. JP-A-2004-261003 describes a method of preparing fermented soybean milk by fermenting soybean milk and by adding palatinose (isomaltulose) before, during or after fermentation. In the Japanese application it is observed that the grass smell inherent to soybean milk can be reduced to a certain extent by fermenting soybean milk with a combination of a lactic acid bacterium and a bifidobacterium, but that satisfactory results cannot always be established, in particular due to the taste and smell of acetic acid, which is metabolic product of the fermentation. Palatinose is incorporated in the fermented soybean milk to suppress the unpleasant taste, fermentation smell, harshness and acetic acid smell generated in the course of lactic acid fermentation or acetic acid fermentation. The examples of the Japanese patent application describe the preparation of fermented drink yogurts from a soybean milk to which isomaltulose and sucrose are added prior and/or after fermentation. In the examples a starter culture is used that comprises *Lactobacillus delbrueckii* subsp. *Bulgaricus* and *Streptoccus thermophilus.* The drink yogurts disclosed in the Japanese application are extremely sweet as they contain more than 8 wt.% of added disaccharide (isomaltulose and/or sucrose).

Murti TW et al., Journal of Food Science (1993), 58(1), pages 153-157 describe experiments in which soymilk and cow milk were inoculated with *Streptococci, Lactobacilli* in the absence of presence of *Bifidobacteria* and wherein the concentration of a number of volatile compounds was monitored during fermentation. The results show that during fermentation of soy milk at 42 °C the concentration of n-hexanal was decreased from 2.31 ppm to 0.55 ppm (no *Bifidobacteria*) or 0.45 ppm (with *Bifidobacteria*) after 4 hours. The lactic acid content after 4 hours of fermentation was at least 0.4 wt.%.

### Summary of the Invention

The inventors have developed a method of fermenting a soy protein containing substrate that effectively removes off-flavour notes originating from the soy component. The method of the present invention utilises a culture containing an off-flavour removing lactic acid bacteria (LAB) strain capable of metabolising a C₅-C₉ n-alkanal and/or *trans*-2-hexenal. The substrate employed in the present method is a pasteurised or sterilised aqueous liquid containing 0.5-8 wt.% of dissolved soy protein. In the present method, after inoculation, the substrate is incubated at a temperature of 20-45 °C for 0.4-6 hours to yield a fermented product with excellent taste. Unlike most fermentation methods described in the prior art, not more than a limited amount (less than 600 ppm) of lactate is produced by the LAB strain that is employed to remove off-flavour.

C₅-C₉ n-alkanals and trans-2-hexenal are flavour molecules that are believed to be largely responsible for the `beany' off-flavour often found in soy based products. The inventors have discovered that it is possible to remove typical soy-related off-notes in a very effective way by employing a LAB strain capable of metabolising a C₅-C₉ n-alkanal and/or *trans*-2-hexenal and by conducting a relatively short fermentation that yields not more than limited quantities of lactate.

The present invention offers the advantage that it enables the preparation of bland tasting soy-based products. Unlike most prior art methods describing fermentation of soy-based substrates with lactic acid bacteria, the present method does not yield substantial quantities of lactic acid. Thus, the bland tasting fermented product obtained by the present method can be used as a neutral base to which any desirable flavour can be added (or can be introduced by a subsequent fermentation step). The fermented product obtained by the present method further offers the advantage that it will be appreciated by individuals who do not like dairy or soy flavour notes.

### Detailed Description of the Invention

Accordingly, the present invention relates to a method of removing off-flavour from a soy protein containing substrate, said method comprising a neutralisation procedure which includes the following steps:
- providing a pasteurised or sterilised aqueous liquid containing 0.5-8 wt.% of dissolved soy protein;
- inoculating the pasteurised or sterilised liquid with a culture containing an off-flavour removing lactic acid
- bacteria (LAB) strain capable of metabolising a C₅-C₉ n-alkanal and/or trans-2-hexenal, said inoculation optionally occurring after said pasteurised or sterilised liquid has first been fermented with another micro-organism;
- fermenting the inoculated aqueous liquid by incubation at a temperature in the range of 20-45 °C for 0.4-6 hours;
wherein less than 600 ppm of lactate is formed during said neutralisation procedure;
wherein the culture employed in the neutralisation procedure reduces the content of at least one C₅-C₉ n-alkanal by at least 30%, preferably by at least 50% when a neutral soy milk having a protein content of 2.5 wt.% is inoculated with 10⁷ viable cells of said culture per ml and incubated at 30 °C for 4 hours, with the proviso that prior to inoculation the following aldehydes were added in the indicated amounts: 2 ppm of n-pentanal, 2 ppm of n-hexanal, 2 ppm of n-heptanal and 2 ppm of n-octanal;
wherein the off-flavour removing LAB strain is a mesophilic LAB strain having an optimum growth temperature in the range of 25-37 °C, said mesophilic LAB strain being selected from the group consisting of *Lactobacillus brevis, Lactobacillus fermentum, Lactobacillus sake, Lactobacillus sanfranciscensis, Lactobacillus plantarum, Lactococcus lactis* subsp *lactis, Lactococcus lactis* subsp *cremoris, Leuconostoc mesenteroides, Leuconostoc cremoris, Leuconostoc lactis, Leuconostoc pseudomesenteroides* and combinations thereof.

The term "lactic acid bacterium" as used herein refers to acid tolerant, non-sporulating, non-respiring rod-shaped Gram positive bacilli or cocci that produce lactic acid as the major metabolic endproduct of carbohydrate fermentation. As used herein, the term "lactic acid bacterium" does not encompass *Bifidobacterium.*

The term "lactate" as used herein encompasses lactic acid as well as edible salts of lactic acid.

The lactate concentration in the fermented product is suitably determined by the methodology described in the examples. Although the present method employs a culture that comprises a lactic acid producing strain, it is preferred to operate the neutralisation procedure in such a way that during fermentation lactate concentration increases by not more than 500 ppm, more preferably by not more than 400 ppm and most preferably by not more than 350 ppm.

In accordance with another preferred embodiment, during fermentation pH decreases by not more than 1.5 pH unit, more preferably by not more than 1.2 pH unit and most preferably by not more than 1.0 pH. Typically, during the neutralisation procedure of the present method pH of the aqueous liquid remains above 5.5, most preferably above 6.0.

Naturally, the fermented product obtained from the neutralisation procedure may advantageously be acidified by addition of e.g. lactic acid or citric acid in order to improve taste and/or microbiological stability.

Unlike common fermentation processes, the neutralisation procedure of the present method advantageously produces little or no flavour. Accordingly, in a particularly preferred embodiment, less than 0.2 ppm of diacetyl and less than 0.2 ppm of acetaldehyde are formed during the neutralisation procedure. Even more preferably, less than 0.05 ppm of diacetyl is formed during the neutralisation procedure. In another advantageous embodiment less than 0.05 ppm of acetaldehyde is formed during the neutralisation procedure.

The duration of the fermentation step in the neutralisation procedure advantageously does not exceed 5 hours. Even more preferably fermentation is discontinued after not more than 4.5 hours, most preferably after not more than 4 hours. As shown in the examples, it is possible to produce a fermented product with substantially reduced off-flavour after only 4 hours.

The one or more off-flavour removing LAB strains employed in the present method are capable of metabolising a C₅-C₉ n-alkanal and/or *trans*-2-hexenal. In order to identify LAB strains that exhibit this capability a screening may be performed in which a model substrate is fermented with a candidate LAB strain under standardised conditions, following which the effect on the concentration of the aforementioned aldehydes is determined. The culture that is employed in the neutralisation procedure is capable of reducing the content of at least one C₅-C₉ n-alkanal by at least 30%, preferably by at least 50% when a neutral soy milk having a protein content of 2.5 wt.% is inoculated with 10⁷ viable cells of said culture per ml and incubated at 30°C for 4 hours, with the proviso that prior to inoculation the following aldehydes were added in the indicated amounts: 2 ppm of n-pentanal, 2 ppm of n-hexanal, 2 ppm of n-heptanal and 2 ppm of n-octanal. The soy milk employed in the aforementioned is derived from an aqueous soybean extract.

A decrease in concentration of a particular substance by X% means that if the starting concentration was Y ppm, the decreased concentration equals Y(100-X)/100 ppm.

The diacetyl, acetaldehyde, alkanal and alkenal concentrations referred to in this document are determined by the analytical methods described in the examples.

According to a preferred embodiment, during the neutralisation procedure the concentration of at least one C₅-C₉ n-alkanal decreases by at least 30% and/or concentration of *trans-2-*hexenal decreases by at least 30%.

The inventors have found that it is feasible to achieve very significant reductions in n-aldehyde levels during fermentation. According to a preferred embodiment, during fermentation n-pentanal concentration, n-hexanal concentration, n-heptanal concentration, n-octanal and/or n-nonanal concentration decreases by at least 50%, more preferably by at least 70% and most preferably by at least 80%.

According to one particularly preferred embodiment, during fermentation the n-hexanal concentration decreases by at least 50%, more preferably by at least 70% and most preferably by at least 80%. According to another preferred embodiment, during fermentation *trans*-2-hexenal concentration decreases by at least 50%, preferably by at least 70%, most preferably by at least 80%.

As illustrated in the examples, in the present method the concentration of a range of undesirable aldehydes can be reduced dramatically by the fermentation step. Hence, in a preferred embodiment, during fermentation at least 3, more preferably at least 4 and most preferably at least 5 aldehydes selected from the group consisting of n-pentanal, n-hexanal, n-heptanal, n-octanal, n-nonanal and trans-2-hexenal are reduced by at least 30%, more preferably by at least 50% and most preferably by at least 70%.

The inventors have found that the present method can advantageously be employed to substantially reduce the level of 2-methylbutanal and 3-methylbutanal. Sources of soy protein often contain 2-methylbutanal and 3-methylbutanal in concentrations that are well above the so called flavour threshold level. In many soy products, the typical "cereal" and/or "malty" flavour contribution of 2-methylbutanal and 3-methylbutanal is highly undesirable. Consequently, in accordance with a particularly preferred embodiment of the present method, during fermentation concentration of 2-methylbutanal and/or 3-methylbutanal decreases by at least 50%, more preferably by at least 70% and most preferably by at least 90%.

The neutralisation procedure of the present invention is particularly effective in removing soy off-flavour notes when a mesophilic LAB strain is used that has an optimum growth temperature in the range of 25-37 °C. The neutralisaton procedure advantageously employs incubation at a temperature in the range of 20-40 °C, more preferably in the range of 25-35 °C.

The one or more LAB strains employed in the neutralisation procedure are advantageously selected from the group consisting of species of the genus *Lactococcus,* species of the genus *Leuconostoc,* mesophilic strains of the genus *Lactobacillus* having an optimum growth temperature below 35 °C and combinations thereof.

Mesophilic strains of the genus *Lactobacillus* that may advantageously be employed in the neutralisation procedure include *Lactobacillus brevis, Lactobacillus fermentum, Lactobacillus sake, Lactobacillus sanfranciscensis* and combinations thereof. According to a particularly preferred embodiment, the culture employed in the neutralisation procedure comprises a lactic acid bacteria strain selected from the group consisting of *Lactobacillus fermentum, Lactobacillus plantarum, Lactococcus lactis* subsp *lactis* (e.g. *Lactococcus lactis* subsp *lactis* biovar *diacetylactis), Lactococcus lactis* subsp *cremoris, Leuconostoc mesenteroides, Leuconostoc cremoris, Leuconostoc lactis, Leuconostoc pseudomesenteroides* and combinations thereof.

The neutralisation procedure of the present method typically comprises inoculation with the culture in a concentration of at least 10⁵ viable cells per ml. Even more preferably the procedure utilises inoculation with said culture in a concentration of at least 10⁶, most preferably with at least 10⁷ viable cells per ml. Typically, the concentration in which the latter culture is employed does not exceed 10⁸ viable cells per ml.

In a particularly preferred embodiment of the present invention, the method comprises two successive fermentation stages, one fermentation stage that removes off-flavour (the neutralisation procedure) and another fermentation stage that generates a desirable flavour (a flavour production procedure).

In accordance with this advantageous embodiment, the neutralisation procedure is followed by a flavour production procedure comprising:
- inoculating the fermented aqueous liquid with a culture comprising a flavour producing LAB strain capable of producing diacetyl and/or acetaldehyde;
- further fermenting the fermented aqueous liquid by incubation at a temperature in the range of 25-48 °C for 1-24 hours;
or the neutralisation procedure is preceded by a flavour production procedure comprising:.
- inoculating the pasteurised or sterilised aqueous liquid with a culture comprising a flavour producing LAB strain(s) capable of producing diacetyl and/or acetaldehyde;
- fermenting the aqueous liquid by incubation at a temperature in the range of 25-48 °C for 1-24 hours.

Most preferably, in the present method the flavour production procedure follows the neutralisation procedure. Thus, removal of desirable flavour notes during the neutralisation procedure can be avoided.

The culture employed during the flavour production procedure preferably is characterised in that it produces at least 0.1 mg/l diacetyl and/or at least 0.1 mg/l acetaldehyde when a neutral soy milk having a protein content of 2.5 wt.% and containing 2 wt.% of added sucrose is inoculated with 10⁷ viable cells of said culture per ml and incubated at 43 °C for 6 hours. Even more preferably, the culture employed during the flavour production procedure is characterised in that it produces at least 0.3 mg/l diacetyl and/or at least 0.2 mg/l acetaldehyde when applied in this fashion.

The one or more flavour producing LAB strains utilised in the present method preferably are thermophilic LAB strains having an optimum growth temperature of at least 35°C, even more preferably of at least 38 °C. According to a more preferred embodiment, the thermophilic LAB strains are selected from the group consisting of: *Streptococcus thermophilus, Lactobacillus delbrueckii, Lactobacillus helveticus, Lactobacillus acidophilus, Lactobacillus casei, Lactobacillus reuteri, Lactobacillus rhamnosus* and combinations thereof. Most preferably, the thermophilic LAB strains are selected from the group consisting of *Streptococcus thermophilus, Lactobacillus delbrueckii* and combinations thereof.

The present method typically comprises inoculation with the flavour producing LAB strain(s) in a concentration of at least 10⁵ viable cells per ml. Even more preferably, the method utilises inoculation with the flavour producing LAB strain(s) in a concentration of at least 10⁶, most preferably with at least 10⁷ viable cells per ml. Typically, the concentration in which the latter strain(s) are employed does not exceed 10⁸ viable cells per ml.

The duration of the flavour production typically lies in the range of 2-12 hours, more preferably of 3-10 hours. According to another preferred embodiment the combined duration of the neutralisation procedure and the flavour production procedure does not exceed 14 hours, even more preferably it does not exceed 10 hours and most preferably it does not exceed 8 hours. The flavour production procedure of the present method advantageously employs incubation at a temperature in the range of 35-50 °C, preferably of 38-48 °C. The average incubation temperatures employed during the neutralisation procedure and the flavour production procedure typically differ by at least 5 °C, preferably by at least 10 °C.

In the present method, during the flavour production procedure, diacetyl concentration advantageously increases with at least 0.2 ppm, more preferably with at least 0.4 ppm and most preferably by at least 0.8 ppm. Likewise, during said flavour production procedure, acetaldehyde concentration preferably increases with at least 0.1 ppm, more preferably with at least 0.2 ppm and most preferably by at least 0.3 ppm.

The fermented product obtained at the end of the flavour production procedure typically contains at least 0.4 ppm, more preferably at least 0.8 ppm of diacetyl. The diacetyl concentration in said fermented product usually does not exceed 40 ppm.

The amount of acetaldehyde in the fermented product of the flavour production procedure typically is at least 0.05 ppm, most preferably at least 0.1 ppm. The acetaldehyde content of said fermented product typically does not exceed 40 ppm. During the flavour production procedure microbial production of considerable quantities of lactate advantageously causes a substantial pH decrease. Typically, during the flavour production procedure the pH of the aqueous liquid decreases by at least 1.5 pH units, even more preferably by at least 2.0 pH units. Typically pH does not decrease by more than 3.5 pH units.

In accordance with another preferred embodiment, during the flavour production procedure lactate concentration increases with at least 500 ppm, more preferably with a least 1000 ppm and most preferably with at least 1500 ppm.

The pH of the fermented product obtained from the flavour production procedure usually does not exceed 6.0, more preferably it does not exceed 5.5. During fermentation, the pH of the aqueous liquid typically does not decrease below 3.5, more preferably it does not decrease below 4.0.

The fermented product obtained from the present method preferably has a water content of at least 85 wt%, most preferably 87 wt%, based on the total weight of the fermented product.

According to another preferred embodiment, the soy protein content of the soy-based fermented beverage of the invention is within the range of 1-7 wt%, more preferably in the range of 2-6 wt.% and most preferably of 2.5-5.5 wt%, based on the total weight of the fermented soy-based beverage.

"Soy protein content", as used herein, refers to the total amount of soy protein and soy protein derived peptides contained in the fermented beverage. The fermented beverage may be based on soy protein, on soy protein hydrolysate or combinations thereof. As will be understood by the skilled person (enzymatic) hydrolysis of peptide bonds may occur during fermentation.

The substrate that is fermented in the present method, i.e. the aqueous liquid containing 0.5-8 wt.% of dissolved soy protein is preferably prepared from a soy protein source selected from the group consisting of soy isolate, soy concentrate, soy flour and combinations thereof. According to a particularly preferred embodiment, the latter soy protein sources were obtained from soy beans exhibiting very low lipoxygenase activity, e.g. a lipoxygenase activity of less than 15 kU/mg. Even more preferably the soy protein source is derived from soy beans exhibiting a lipoxygenase activity of less than 10 kU/mg, most preferably of less than 8 kU/mg. Likewise, it is advantageous to prepare the present aqueous liquid from a soy protein source having a lipoxygenase activity of less than 5 kU per gram of soy protein. Most preferably the soy protein source has a lipoxygenase activity of less than 1 kU per gram of soy protein.

Lipoxygenase activity is suitably determined spectrophotometrically by using a dye-coupling assay specific for hydroperoxides generated from linoleic acid, as fully described by Anthon and Barrett (J. Agric. Food Chem. 2001, 49, 32-37).

Typically, the soy protein employed in the preparation of the aqueous liquid containing 0.5-8 wt.% of dissolved soy protein has protein content of at least 30 wt.% and fat content of less than 40 wt.%.

The present method employs soy protein derived from soybeans that have not been dehypocotylized. Accordingly, the aforementioned soy isolate, soy concentrate and/or soy flour are advantageously derived from optionally dehulled soybeans that still comprise the hypocotyl. Most preferably the latter sources of soy protein sources are derived from dehulled soybeans that still comprise the hypocotyls.

The term "dehypocotylized soybeans" as used herein refers to soybeans from which the hypocotyl has been removed. Hypocotyl is a botanical term for a part of a germinating seedling of a seed plant. As the plant embryo grows at germination, it sends out a shoot called a radicle that becomes the primary root and penetrates down into the soil. After emergence of the radicle, the hypocotyl emerges and lifts the growing tip above the ground, bearing the embryonic leaves (called cotyledons) and the plumule that gives rise to the first true leaves. The hypocotyl is the primary organ of extension of the young plant and develops into the stem.

The present method is advantageously employed to produce a fermented aqueous liquid that can be used as a base for the production of a beverage. In accordance with this particular embodiment of the invention the fermented product obtained in the present method has a relatively low viscosity, e.g. a viscosity at a temperature of 7 °C of less than 50 mPa.s at 100 s⁻¹, most preferably of less than 25 mPa.s at 100 s⁻¹. A viscosity of 50 mPa.s at 100 s⁻¹ means that the product is 50 times more viscous than water and about 25 times more viscous than milk. Viscosity is suitably measured with the help of a rheometer AR1000 (TA Instruments, Etten-Leur, the Netherlands), using a 40-mm diameter, 2% angle cone measuring system. A steady-state shear process should be used, increasing shear rate from 0.01 to 250/s. The measuring temperature is 7 °C and only the data point at 100 s⁻¹ is used.

In one embodiment of the present invention the pasteurised or sterilised aqueous liquid is fermented in one or more fermentation vessels, following which the fermented product is filled into containers that are subsequently sealed. In accordance with one preferred embodiment, the fermented product is pasteurised or sterilised before filling or, alternatively, it is sterilised once it is filled into a container.

According to another preferred embodiment, edible acid is added to the fermented product before it is filled into containers that are subsequently sealed, and said fermented product is not pasteurised or sterilised. Typically, edible acid is added to lower the pH to less than 4.5. Examples of edible acids that can suitably be employed include lactic acid, citric acid and combinations thereof. The inventors have observed that post-acidification without pasteurisation or sterilisation yields a product that is microbiologically stable and that has an exceptionally good taste.

The present method enables the preparation of a pleasant tasting beverage without using high amounts of sweetener to mask soy off-flavour notes. Thus, advantageously less than 6 wt.% of disaccharides are added before, during or after fermentation. According to a particularly preferred embodiment, the fermented product in the sealed container contains less than 5 wt.% of disaccharides, most preferably less than 4 wt.% of disaccharides. According to yet another preferred embodiment, the packaged fermented product contains less than 8 wt.% of mono- and/or disaccharides, most preferably less than 5 wt.% of mono- and/or disaccharides.

According to another embodiment, the inoculated pasteurised or sterilised liquid is filled into a container which is subsequently sealed and the fermentation actually occurs within the container.

The fermented product that is filled into the containers preferably is a liquid containing not more than 6 wt.% of protein, most preferably containing 1.0-5.0 wt.% of protein. The pasteurised or sterilised aqueous liquid that is used as a substrate in the present method advantageously contains an added carbohydrate that can be metabolised by the LAB strains employed in the present method. Examples of suitable carbohydrates include: glucose, fructose, galactose, sucrose, raffinose, stachyose, lactose and combinations thereof. Typically, these fermentable carbohydrates are added in an amount of 0.2-100 g/l, most preferably of 0.5-30 g/l.

Besides a considerable amount of soy protein, the pasteurised or sterilised aqueous liquid of the present invention may contain a small quantity of milk protein, such as whey protein or casein. Preferably, the pasteurised or sterilised aqueous liquid contains no milk protein.

In the present method a variety of food ingredients and/or additives may be incorporated in the fermented product by introducing these components to the aqueous liquid prior to or after pasteurisation or sterilisation, during fermentation or after fermentation. Examples of food ingredients and additives that may suitably be incorporated include: fruit pieces; fruit preparations; sweeteners, including artificial sweeteners; oil; flavours, colourings, vitamins, minerals and fibres.

As explained herein before, JP-A-2004-261003 describes the preparation of a fermented soy-based product wherein palatinose (isomaltulose) is added prior, during or after fermentation. In the present method the pasteurised or sterilised aqueous liquid preferably does not contain isomaltulose and no isomaltulose is added prior to, during or after fermentation.

The invention is further illustrated by means of the following non-limiting examples:

### EXAMPLES

### Analytical methods

*Analysis of off-flavour volatiles by SPME followed by GC-MS:* 2 g of sample were put in a 20 ml headspace vial and sealed with an airtight cap.

Samples were analyzed by means of solid phase micro extraction. Fiber used: Carboxen/PDMS 85 µm ex. Supelco.

Analyses were carried out on an Agilent GC/MS, equipped with a Gerstel CIS-4 injector and a Gerstel MPS-2 autosampler with SPME option. Column: VF-5; 50m * 0.2 mm * 0.33 µm

GC program:
- 40°C(2 min) -(3°/min)->160°C(0 min)-(20°/min)->250°C (2 min)
- Gas: Helium
- Flow: 1 ml/min, constant flow

SPME Sampling time: 35 min at 40°C
Desorption: 40 minutes at 170°C
Split-less time: 2 min.

*Quantitative analysis of diacetyl and acetaldehyde:*
2 g of sample were put in a 20 ml headspace vial and sealed with an airtight cap.

All samples were analyzed in duplicate.

External calibration levels were constructed by adding acetaldehyde and diacetyl to 2 g of soy base prepared according to example 1, at levels of 0, 1, 2, 4 and 10 µg/g.

Calibration lines were constructed by plotting the peak areas of ion 44 (for acetaldehyde) resp. 86 (for diacetyl) against the amount added. These calibration lines were then used to determine the amount of acetaldehyde and diacetyl in the fermented soy samples.

Samples were analyzed by means of solid phase micro extraction. Fiber used: Carboxen/PDMS 85 µm ex. Supelco.

Analyses were carried out on an Agilent GC/MS, equipped with a Gerstel CIS-4 injector and a Gerstel MPS-2 autosampler with SPME option. Column: VF-5; 50m * 0.2 mm * 0.33 µm

GC program:
- -20°C(10 min) -(1.5°/min)->40°C(0 min)-(20°/min)->250°C (2 min)
- Gas: Helium
- Flow: 1 ml/min, constant flow

SPME Sampling time: 35 min at 40°C
Desorption: 40 minutes at 170°C
Split-less time: 2 min.

### Lipoxygenase activity:

Lipoxygenase activity was determined spectrophotometrically by using a dye-coupling assay specific for hydroperoxides generated from linoleic acid, as fully described by Anthon and Barrett (J. Agric. Food Chem. 2001, 49, 32-37).

Enzyme extracts were obtained by homogenising 100 mg of defatted soybean grindings in 20 ml of 100 mM pH 6.0 Na₂HPO₄ buffer + 1% w/v NaCl then centrifuging at 15,000 rpm at 4°C for 30 minutes and filtering the supernatant through a 0.2 µm filter.

To 500 µl of a solution of 10 mM 3-(dimethylamino)benzoic acid in 100 mM pH 6.0 Na₂HPO₄ was added 20 µl of 27 mM linoleic acid dispersed in 1.4% w/v Tween 20, and 10 µl of enzyme extract. After 5 minutes, 500 µl of a solution containing 0.2 mM 3-methyl-2-benzothiazolinone hydrazone and 0.1 mg/ml bovine haemoglobin was added. After a further 5 minutes, 500 µl of 1% w/v sodium lauryl sulphate was added to terminate the reaction. The absorbance at 598 nm was then measured. The above actions can be carried out in a single 4.5 ml 1 cm path cuvette.

A standard curve was produced by reacting dilutions of soybean lipoxygenase from Sigma-Aldrich, of certificated activity. This was used to calculate the activities of the extracts from the soybeans. Blank readings were subtracted, obtained using denatured enzyme extracts heated at 95°C for 30 minutes. One unit of activity is the increase of 0.001 absorbance units at 598 nm per minute from the hydroperoxidation of linoleic acid.

### Lactate concentrations:

Lactate concentrations were determined using a commercially available reflectometrical test (Lactic Acid Test, Merck KGaA, 64271 Darmstadt, Germany). Samples were analysed in duplicate and mean values were taken.

### Viable counts:

The number of live bacteria in the cultures was determined by plate counting appropriate dilutions of samples containing *L*. *brevis* on MRS agar and anaerobic incubation for 3 days at 37°C. *S. thermophilus* (T-071016) was enumerated using M17 agar and aerobic incubation for 3 days at 30°C. Numbers are expressed as Colony forming units per ml of product (Cfu/ml).

### Example 1

A soybase was prepared by mixing 5.6% soy milk powder (Soy Supreme Fibre Reduced soy bean powder SunOpta Grains and Food Group, Hope, MN, USA) in hot water (75-85°C). The powder had a lipoxygenase activity of less than 5 kU per gram of soy protein and was hydrated for at least 15 minutes before addition of 2% sucrose, 1% glucose and 0.35% HM pectin. The mix was then pasteurised for 20 sec. at 72°C and homogenized at 150 bar. The soybase was kept at 5 °C until further use.

500 ml soy base was inoculated by adding 2% of a preculture of *L.brevis LB20 -* CBS 122,084 (Deposited at Centraal Bureau voor Schimmelcultures, Baarn, The Netherlands) at 30 °C. The mixture was incubated for 4 hrs at 30 °C during which the pH of 6.7 did not change. The fermentation process was stopped by rapid cooling to 4 °C. Viable counts increased from 1.4x10⁷ to 2.8x10⁷ Cfu/ml during these 4hrs of fermentation. The lactic acid level was found to have increased to 0.16 g/l during fermentation.

An aliquot of the fermented sample and of the original soybase were subjected to SPME followed by GC-MS analysis. It was found that during fermentation the peak area for pentanal, hexanal, heptanal, octanal, nonanal, *trans*-2-hexenal, *trans*-2-heptenal, *trans*-2-octenal, *trans*-2-nonenal, *trans,trans*-2,4-heptadienal, 2-heptanone, 3,5-octadien-2-one, 2-methyl butanal and 3-methyl butanal had decreased considerably as shown in Table 1:

**Table 1**

| | Decrease in peak area (%) |
|---|---|
| n-pentanal | >95 |
| n-hexanal | >95 |
| n-heptanal | 94 |
| n-octanal | 95 |
| n-nonanal | 77 |
| *trans*-2-hexenal | 89 |
| *trans*-2-heptenal | 49 |
| *trans*-2-octenal | >95 |
| *trans*-2-nonenal | 42 |
| *trans,trans*-2,4-heptadienal | 86 |
| 2-heptanone | >95 |
| 3,5-octadien-2-one | 44 |
| 2-methyl butanal | 88 |
| 3-methyl butanal | >95 |

The GC-MS analyses further showed that during fermentation essentially no significant production of acetaldehyde or diacetyl had occurred.

The fermented product and the non-fermented soy base were evaluated by an expert tasting panel (n=12). The fermented product was perceived as statistically significantly reduced in soy odour and soy taste compared to the non-fermented product.

### Example 2

500 ml soy base prepared according to example 1 was inoculated by adding 2% of a preculture of *L. brevis LB20 -* CBS 122,084 at 30 °C. The mixture was incubated for 4 hrs at 30 °C during which the pH of 6.7 did not change. Subsequently, the temperature was raised to 43 °C and 0.02 % of a commercially available frozen yoghurt culture concentrate T-071016 (defined mixed culture of *Streptococcus thermophilus* strains, provided by Chr Hansen, Horsholm, Denmark) was added. Fermentation was continued for an additional period of 4 h to yield a final pH of 4.8, after which the process was stopped by rapid cooling of the mixture to 4 °C. Viable counts of the Lactobacilli increased from 2.8x10⁷ to 7.6x10⁷ Cfu/ml and viable counts of the Streptococci increased from 4.4x10⁷ to 5.4x10⁸ Cfu/ml during fermentation following inoculation with the yoghurt culture. The lactic acid level was found to have increased to 2.1 g/l during the latter phase of the fermentation.

Aliquots of samples obtained at the end of the first fermentation stage, i.e. after 4 hours fermentation with *L*. *brevis,* at the end the second fermentation stage, i.e. after 4 hours additional fermentation following inoculation with the yoghurt culture, and of the original soybase were stored at-20°C. The aforementioned aliquots were subjected to SPME followed by GC-MS analysis. It was found that during fermentation the peak area for pentanal, hexanal, heptanal, octanal, nonanal, *trans*-2-hexenal, *trans*-2-heptenal, *trans-2-*octenal, *trans*-2-nonenal, *trans,trans*-2,4-heptadienal, 2-heptanone, 3,5-octadien-2-one, 2-methyl butanal and 3-methyl butanal had decreased considerably at the end of the first fermentation stage and that this decrease was maintained during the second fermentation stage as shown in Table 2:

**Table 2**

| | Decrease in peak area (%) | |
|---|---|---|
| | End of first fermentation stage | End of second fermentation stage |
| n-pentanal | >95 | >95 |
| n-hexanal | >95 | >95 |
| n-heptanal | 94 | 94 |
| n-octanal | 95 | 72 |
| n-nonanal | 77 | 87 |
| *trans*-2-hexenal | 89 | 92 |
| *trans*-2-heptenal | 49 | 20 |
| *trans*-2-octenal | >95 | 86 |
| *trans*-2-nonenal | 42 | 57 |
| *trans,trans*-2,4-heptadienal | 86 | 24 |
| 2-heptanone | >95 | >95 |
| 3,5-octadien-2-one | 44 | 74 |
| 2-methyl butanal | 88 | >95 |
| 3-methyl butanal | >95 | >95 |

The GC-MS analyses further showed that during the first fermentation stage virtually no diacetyl or acetaldehyde was produced. During the second fermentation stage 0.5 ppm of diacetyl and 0.1 ppm of acetaldehyde were produced.

In line with the analytical data, tasting of the fermented samples obtained at the end of the first and second fermentation stage by an expert panel indicated a significant reduction of soy related off-notes. The sample obtained from the second fermentation stage was found to have a pleasant yoghurt-like taste.

### Example 3

A soybase was prepared by mixing 5.6% soy milk powder (Soy Supreme Fibre Reduced soy bean powder SunOpta Grains and Food Group, Hope, MN, USA) in hot water (75-85°C). The powder had a lipoxygenase activity of less than 5 kU per gram of soy protein and was hydrated for at least 15 minutes before addition of 2% sucrose and 0.35% HM pectin. The mix was then pasteurised for 20 sec. at 72°C and homogenized at 180 bar. The soybase was kept at 5 °C until further use.

180 ml soy base was inoculated by adding 2% of a preculture of *L.brevis* at 30 °C (preculture was prepared by inoculating MRS medium from a frozen stock and incubating for 24h at 30°C). The mixture was incubated for 2 to 6 hrs at 30°C. The fermentation process was stopped by rapid cooling to 4 °C and pasteurisation at 85°C for 30 minutes. Five different *L. brevis* strains were tested. The different *L. brevis* strains tested were:
- Lb20 (same strain as in Examples 1 and 2)
- 1K (isolated from Kenkey, African fermented maize product)
- 5K (isolated from Kenkey, African fermented maize product)
- JH2 (isolated from German krautsalat)
- ATCC8287 (Ex ATCC, isolated from green fermenting Sevillano variety olives)

An aliquot of the fermented sample and of the non fermented material were subjected to SPME followed by GC-MS analysis. It was found that during fermentation the peak area for pentanal, hexanal, heptanal, octanal, nonanal, *trans*-2-heptenal, *trans-2-*octenal, *trans*-2-nonenal, 2-heptanone, 2-nonanone, 3,5-octadien-2-one and 3-methyl butanal had decreased as shown in Table 3:

**Table 3**

| | Lb20 | 1K | 5K | JH2 | ATCC8287 |
|---|---|---|---|---|---|
| Fermentation time (hr) | 6 | 6 | 6 | 2 | 6 |
| pH | 6.5 | 6.5 | 6.5 | 5.9 | 6.5 |
| Lactic acid (ppm) | 88 | 92 | 88 | 407 | 82 |
| Acetaldehyde (ppb) | 86 | 52 | 95 | 122 | 30 |
| Diacetyl (ppb) | 6 | 4 | 0 | 58 | 11 |
| Decrease in peak area (%) | | | | | |
| • n-pentanal | 71 | 54 | 24 | 39 | 64 |
| • n-hexanal | 70 | 70 | 74 | 65 | 72 |
| • n-heptanal | 57 | 54 | 61 | 61 | * |
| • n-octanal | 88 | 41 | 94 | 97 | * |
| • n-nonanal | 77 | 74 | 77 | 54 | 71 |
| • *tr*-2-heptenal | 37 | 30 | 29 | 15 | 37 |
| • *tr*-2-octenal | 43 | 41 | 51 | 38 | 29 |
| • *tr*-2-nonenal | 49 | 35 | 41 | 7 | 30 |
| • 2-heptanone | 67 | 28 | 25 | 42 | * |
| • 2-nonanone | 58 | 43 | 44 | 45 | 82 |
| • 3-methyl butanal | 71 | * | * | 39 | 87 |
| • 3,5-octadien-2-one | 48 | 52 | 42 | 11 | 32 |

| | | | | | |
|---|---|---|---|---|---|
| * compound could not be quantified | | | | | |

The fermented products were perceived as reduced in soy odour compared to the non-fermented product. Furthermore no significant "yoghurt" type flavour could be perceived.

### Example 4

A soybase was prepared by mixing 5.6% soy milk powder (Soy Supreme Fibre Reduced soy bean powder SunOpta Grains and Food Group, Hope, MN, USA) in hot water (75-85°C). The powder had a lipoxygenase activity of less than 5 kU per milligram of soy powder and was hydrated for at least 15 minutes before addition of 2% sucrose and 0.35% HM pectin. The mix was then pasteurised for 20 sec. at 72°C and homogenized at 180 bar. The soybase was kept at 5 °C until further use.

180 ml soy base was inoculated by adding 2% of a preculture of a strain taken from the genus *Lactobacillus* or *Leuconostoc* at 30 °C (preculture was prepared by inoculating MRS medium from a frozen stock and incubating for 24h at 30°C). The mixture was incubated for 3 to 4 hrs at 30 °C. The fermentation process was stopped by rapid cooling to 4 °C and pasteurisation at 85°C for 30 minutes. The following three different *Lactobacillus* and *Leuconostoc* strains were tested:
- *Lactobacillus sanfranciscensis* ATCC27651 (ex ATCC, isolated from San Francisco sour dough)
- *Leuconostoc mesenteroides* Lb170 (isolated from artisinal French bread dough)
- *Leuconostoc pseudomesen teroides* Lb17 (Deposited at Centraal Bureau voor Schimmelcultures, Baarn, The Netherlands)

An aliquot of the fermented sample and of the non fermented material were subjected to SPME followed by GC-MS analysis. It was found that during fermentation the peak area for pentanal, hexanal, heptanal, octanal, nonanal, *trans*-2-heptenal, *trans-*2-octenal, *trans*-2-nonenal, 2-heptanone, 2-nonanone, 3,5-octadien-2-one and 3-methyl butanal had decreased as shown in Table 4:

**Table 4**

| | ATCC27651 | Lb170 | Lb17 |
|---|---|---|---|
| Fermentation time (hr) | 4 | 3 | 3 |
| pH | 5.9 | 5.9 | 6.0 |
| Lactic acid (ppm) | 438 | 344 | 217 |
| Acetaldehyde (ppb) | 0 | 0 | 71 |
| Diacetyl (ppb) | 19 | 26 | 0 |
| Decrease in peak area (%) | | | |
| • n-pentanal | 59 | 74 | 59 |
| • n-hexanal | 69 | 61 | 65 |
| • n-heptanal | 70 | 60 | 62 |
| • n-octanal | 59 | 77 | 67 |
| • n-nonanal | 76 | 69 | 59 |
| • *tr*-2-heptenal | 31 | * | 37 |
| • *tr*-2-octenal | 57 | 31 | 27 |
| • *tr*-2-nonenal | 30 | 17 | 21 |
| • 2-heptanone | 84 | 43 | 79 |
| • 2-nonanone | 47 | 47 | 83 |
| • 3-methyl butanal | * | 77 | 80 |
| • 3,5-octadien-2-one | * | * | 83 |

| | | | |
|---|---|---|---|
| * **compound could not be quantified** | | | |

The fermented products were perceived as reduced in soy odour compared to the non-fermented product. Furthermore no significant "yoghurt" type flavour could be perceived.

### Example 5

A soybase was prepared by mixing 5.6% soy milk powder (Soy Supreme Fibre Reduced soy bean powder SunOpta Grains and Food Group, Hope, MN, USA) in hot water (75-85°C). The powder had a lipoxygenase activity of less than 5 kU per milligram of soy powder and was hydrated for at least 15 minutes before addition of 2% sucrose and 0.35% HM pectin. The mix was then pasteurised for 20 sec. at 72°C and homogenized at 180 bar. The soybase was kept at 5 °C until further use.

180 ml soy base was inoculated by adding a commercially available yoghurt culture (frozen or freeze dried) according to instructions from the manufacturer. The mixture was incubated for 2 hrs at 43°C. The fermentation process was stopped by rapid cooling to 4 °C and pasteurisation at 85°C for 30 minutes. Two different commercially available yoghurt cultures were tested:
- frozen yoghurt culture concentrate F DVS YC380 (defined mixed culture of *Streptococcus thermophilus* and *Lactobacillus delbrueckii* subsp *bulgaricus* strains, ex Chr Hansen, Horsholm, Denmark)
- freeze dried yoghurt culture concentrate Yo-Mix Vegetal 7 (defined mixed culture of *Streptococcus thermophilus, Lactobacillus delbrueckii* subsp *bulgaricus, Lactobacillus acidophilus, Lactobacillus rhamnosus, Lactobacillus casei, Bifidobacterium bifidum,* ex Danisco, Niebull, Germany)

An aliquot of the fermented sample and of the non fermented material were subjected to SPME followed by GC-MS analysis. It was found that during fermentation the peak area for pentanal, hexanal, heptanal, octanal, nonanal, *trans*-2-heptenal, *trans-2-*octenal, *trans*-2-nonenal, 2-heptanone, 2-nonanone, 3,5-octadien-2-one and 3-methyl butanal had decreased as shown in Table 5:

**Table 5**

| | F DVS YC380 | Yo-Mix Vegetal 7 |
|---|---|---|
| Fermentation time (hr) | 2 | 2 |
| pH | 6.1 | 6.3 |
| Lactic acid (ppm) | 448 | 314 |
| Acetaldehyde (ppb) | 404 | 515 |
| Diacetyl (ppb) | 640 | 467 |
| Decrease in peak area (%) | | |
| • n-pentanal | 17 | 3 |
| • n-hexanal | 62 | 61 |
| • n-heptanal | 52 | 49 |
| • n-octanal | 52 | 31 |
| • n-nonanal | 42 | 54 |
| • *tr*-2-heptenal | 0 | 20 |
| • *tr*-2-octenal | 35 | 31 |
| • *tr*-2-nonenal | 3 | 20 |
| • 2-heptanone | 32 | 18 |
| • 2-nonanone | 48 | 41 |
| • 3-methyl butanal | 52 | * |
| • 3,5-octadien-2-one | 5 | 11 |

| | | |
|---|---|---|
| * **compound could not be quantified** | | |

The fermented products were perceived as reduced in soy odour compared to the non-fermented product. Furthermore a slight fermented dairy note could be perceived.

## Claims

1. A method of removing off-flavour from a soy protein containing substrate, said method comprising a neutralisation procedure which includes the following steps:
- providing a pasteurised or sterilised aqueous liquid containing 0.5-8 wt.% of dissolved soy protein;
- inoculating the pasteurised or sterilised liquid with a culture comprising an off-flavour removing lactic acid bacteria (LAB) strain capable of metabolising a C₅-C₉ n-alkanal and/or *trans*-2-hexenal, said inoculation optionally occurring after said pasteurised or sterilised liquid has first been fermented with another micro-organism;
- fermenting the inoculated aqueous liquid by incubation at a temperature in the range of 20-45 °C for 0.4-6 hours;
wherein less than 600 ppm of lactate is formed during said neutralisation procedure;
wherein the culture employed-in the neutralisation procedure reduces the content of at least one C₅-C₉ n-alkanal by at least 30%, preferably by at least 50% when a neutral soy milk having a protein content of 2.5 wt.% is inoculated with 10⁷ viable cells of said culture per ml and incubated at 30°C for 4 hours, with the proviso that prior to inoculation the following aldehydes were added in the indicated amounts: 2 ppm of n-pentanal, 2 ppm of n-hexanal, 2 ppm of n-heptanal and 2 ppm of n-octanal;
wherein the off-flavour removing LAB strain is a mesophilic LAB strain having an optimum growth temperature in the range of 25-37 °C, said mesophilic LAB strain being selected from from the group consisting of *Lactobacillus brevis, Lactobacillus fermentum*, *Lactobacillus stake, Lactobacillus sanfranciscensis Lactobacillus plantarum*, *Lactococcus lactis subsp lactis*, *Lactococcus lactis* subsp *cremoris, Leuconostoc mesenteroides, Leuconostoc cremoris, Leuconostoc lactis, Leuconostoc pseudomesenteroides* and combinations thereof.

2. Method according to claim 1, wherein less than 400 ppm of lactate is formed during the neutralisation procedure.

3. Method according to claim 1 or 2, wherein less than 0.2 ppm of diacetyl and less than 0.2 ppm, of acetaldehyde are formed during the neutralisation procedure.

4. Method according to any one of the preceding claims, wherein the duration of the neutralisation procedure is not more than 5 hours, preferably not more than 3 hours.

5. Method according to any one of the preceding claims, wherein during the neutralisation procedure concentration of at least one C₅-C₉ n-alkanal decreases by at least 30%, preferably by at least 50%.

6. Method according to any one of the preceding claims, wherein during the neutralisation procedure concentration of *trans*-2-hexenal decreases by at least 30%, preferably by at least 50%.

7. Method according to any one of the preceding claims, wherein during the neutralisation procedure concentration of 2-methylbutanal and/or 3-methylbutanal decreases by at least 50%.

8. Method according to claim 1, wherein the mesophilic strain of the genus *Lactobacillus* is selected from the group consisting of *Lactobacillus brevis, Lactobacillus fermentum, Lactobacillus sake, Lactobacillus sanfranciscensis* and combinations thereof.

9. Method according to claim 1, wherein the mesophilic LAB strain is selected from the group consisting of *Lactobacillus fermentum*, *Lactobacillus plantarum*, *Lactococcus lactis* subsp *lactis*, *Lactococcus lactis* subsp *cxemoris Leuconostoc mesenteroides, Leuconostoc cremoris, Leuconostoc lactis, Leuconostoc pseudomesenteroides* and combinations thereof

10. Method according to any one of the preceding claims, wherein the neutralisation procedure is followed by a flavour production procedure comprising:
- inoculating the fermented aqueous liquid with a culture comprising a flavour producing LAB strain capable of producing diacetyl and/or acetaldehyde;
- further fermenting the fermented aqueous liquid by incubation at a temperature in the range of 25-48 °C for 1-24 hours;
or wherein the neutralisation procedure is preceded by a flavour production procedure comprising:
- inoculating the pasteurised or sterilised aqueous liquid with a culture comprising a flavour producing LAB strain capable of producing diacetyl and/or acetaldehyde;
- fermenting the aqueous liquid by incubation at a temperature in the range of 25-48 °C for 1-24 hours.

11. method according to claim 10, wherein the flavour production procedure follows the neutralisation procedure.

12. Method according to claim 10 or 11, wherein the culture employed during the flavour production procedure produces at least 0.1 mg/l diacetyl and/or at least 0.1 mg/l aetaldehyde when a neutral soy milk having a protein content of 2.5 wt.% and containing 2 wt.% of added sucrose is inoculated with 10⁷ viable cells of said culture per ml and incubated at 43°C for 6 hours.

13. Method according to claims 10-12, wherein the flavour production procedure employs incubation at a temperature in the range of 35-50 °C, preferably of 38-48 °C.

14. method according to any one of claims 10-13, wherein during the flavour production procedure the concentration of diacetyl increases with at least 0.2 ppm.

15. Method according to any one of claims 10-14, wherein during the flavour production procedure the concentration of acetaldehyde increases with at least 0.1 ppm.

16. Method according to any one of claims 10-15, wherein lactate concentration increases with at least 500 ppm during the flavour production procedure.

17. Method according to any one of claims 10-16, wherein the flavour producing LAB strain is a thermophilic LAB strain having an optimum growth temperature of at least 35 °C, preferably of at least 38°C.

18. Method according to claim 17, wherein the thermophilic LAB strain is selected from the group consisting of: *Streptococcus thermophilus, Lactobacillus delbxueckii, Lactobacillus helveticus, Lactobacillus acidophilus, Lactobacillus casei, Lactobacillus reuteri, Lactobacillus rhamnosus* and combinations thereof.

19. Method according to any one of claims 10-18, wherein the flavour production procedure has a duration of 2-12 hours, preferably of 3-10 hours.

## Patentansprüche

1. Verfahren zur Entfernung von Fremdaroma aus einem Soja-Protein enthaltenden Substrat, wobei dieses Verfahren einen Neutralisationsvorgang umfasst, welcher folgende Schritte einbezieht:
- Bereitstellen einer pasteurisierten oder sterilisierten wässrigen Flüssigkeit, welche 0,5- 8 Gew.-% von gelöstem Soja-Protein enthält;
- Animpfen der pasteurisierten oder sterilisierten Flüssigkeit mit einer Kultur, die einen Fremdaroma entfernenden Milchsäurebakterien (LAB)-Stamm umfasst, welcher zur Metabolisierung von C₅-C₉ n-Alkanal und/ oder trans-2-Hexenal imstande ist, wobei dieses Animpfen optional, nachdem die pasteurisierte oder sterilisierte Flüssigkeit zuerst mit einem anderen Mikroorganismus fermentiert worden ist, erfolgt;
- Fermentierung der angeimpften wässrigen Flüssigkeit durch Inkubation bei einer Temperatur in einem Bereich von 20- 45°C für 0,4- 6 Stunden;
wobei weniger als 600 ppm Laktat während des Neutralisationsvorgangs gebildet wird; wobei die Kultur, die in dem Neutralisationsvorgang eingesetzt wird, den Gehalt mindestens eines C₅-C₉ n-Alkanals um mindestens 30 % reduziert, bevorzugt um mindestens 50 %, wenn eine neutrale Sojamilch, die einen Protein-Gehalt von 2,5 Gew.-% hat, mit 10⁷ lebenden Zellen der Kultur pro ml angeimpft wird und bei 30°C für 4 Stunden inkubiert wird, mit der Maßgabe, dass vor dem Inkubieren folgende Aldehyde in den angegebenen Mengen hinzugefügt werden: 2 ppm n-Pentanal, 2 ppm n-Hexanal, 2 ppm n-Heptanal und 2 ppm n-Oktanal;
wobei der das Fremdaroma entfernende LAB-Stamm ein mesophiler LAB-Stamm ist, der eine optimale Wachstumstemperatur im Bereich von 25- 37°C hat, der mesophile LAB-Stamm ausgewählt ist aus der Gruppe bestehend aus *Lactobacillus brevis, Lactobacillus fermentum, Lactobacillus sake, Lactobacillus sanfranciscensis, Lactobacillus plantarum, Lactococcus lactis* subsp *lactis, Lactococcus lactis* subsp *cremoris, Leuconostoc mesenteroides, Leuconostoc cremoris, Leuconostoc lactis, Leuconostoc pseudomesenteroides* und Kombinationen davon.

2. Verfahren nach Anspruch 1, wobei weniger als 400 ppm Lactat während des Neutralisationsvorgangs gebildet wird.

3. Verfahren nach Anspruch 1 oder 2, wobei weniger als 0,2 ppm Diacetyl und weniger als 0,2 ppm Acetaldehyd während des Neutralisationsvorgangs gebildet werden.

4. Verfahren nach irgendeinem der vorhergehenden Ansprüche, wobei die Dauer des Neutralisationsvorgangs nicht mehr als 5 Stunden, bevorzugt nicht mehr als 3 Stunden, beträgt.

5. Verfahren nach irgendeinem der vorhergehenden Ansprüche, wobei während des Neutralisationsvorgangs die Konzentration von mindestens einem C₅-C₉ n-Alkanal um mindestens 30 %, bevorzugt um mindestens 50 %, abnimmt.

6. Verfahren nach irgendeinem der vorhergehenden Ansprüche, wobei während des Neutralisationsvorgangs die Konzentration von trans-2-Hexenal um mindestens 30 %, bevorzugt um mindestens 50 %, abnimmt.

7. Verfahren nach irgendeinem der vorhergehenden Ansprüche, wobei während des Neutralisationsvorgangs die Konzentration von 2-Methylbutanal und/ oder 3-Methylbutanal um mindestens 50 % abnimmt.

8. Verfahren nach Anspruch 1, wobei der mesophile Stamm der Gattung *Lactobacillus* ausgewählt ist aus der Gruppe bestehend aus *Lactobacillus brevis, Lactobacillus fermentum, Lactobacillus sake, Lactobacillus sanfranciscensis* und Kombinationen davon.

9. Verfahren nach Anspruch 1, wobei der mesophile LAB-Stamm ausgewählt ist aus der Gruppe bestehend aus *Lactobacillus fermentum, Lactobacillus plantarum, Lactococcus lactis* subsp *lactis, Lactococcus lactis* subsp *cremoris, Leuconostoc mesenteroides, Leuconostoc cremoris, Leuconostoc lactis, Leuconostoc pseudomesenteroides* und Kombinationen davon.

10. Verfahren nach irgendeinem der vorhergehenden Ansprüche, wobei dem Neutralisationsvorgang ein Geschmacksproduktionsvorgang folgt, welcher umfasst:
- Animpfen der fermentierten wässrigen Flüssigkeit mit einer Kultur, die einen geschmacksproduzierenden LAB-Stamm umfasst, welcher imstande ist, Diacetyl und/ oder Acetaldehyd zu produzieren;
- weitere Fermentierung der fermentierten wässrigen Flüssigkeit durch Inkubation bei einer Temperatur im Bereich von 25- 48°C für 1- 24 Stunden;
oder wobei der Neutralisationsvorgang einem Geschmacksproduktionsvorgang vorausgeht, welcher umfasst:
- Animpfen der pasteurisierten oder sterilisierten wässrigen Flüssigkeit mit einer Kultur, die einen geschmacksproduzierenden LAB-Stamm umfasst, welcher imstande ist, Diacetyl und/ oder Acetaldehyd zu produzieren;
- Fermentierung der wässrigen Flüssigkeit durch Inkubation bei einer Temperatur im Bereich von 25- 48°C für 1- 24 Stunden.

11. Verfahren nach Anspruch 10, wobei der Geschmacksproduktionsvorgang dem Neutralisationsvorgang folgt.

12. Verfahren nach Anspruch 10 oder 11, wobei die Kultur, die während des Geschmacksproduktionsvorgangs eingesetzt wird, mindestens 0,1 mg/l Diacetyl und/ oder mindestens 0,1 mg/l Acetaldehyd produziert, wenn eine neutrale Sojamilch, die einen Proteingehalt von 2,5 Gew.-% hat und 2 Gew.-% zugegebene Saccharose enthält, mit 10⁷ lebenden Zellen von jener Kultur pro ml angeimpft und bei 43°C für 6 Stunden inkubiert wird.

13. Verfahren nach Ansprüchen 10- 12, wobei der Geschmacksproduktionsvorgang eine Inkubation bei einer Temperatur im Bereich von 35- 50°C, bevorzugt von 38- 48°C, anwendet.

14. Verfahren nach irgendeinem der Ansprüche 10- 13, wobei während des Geschmacksproduktionsvorgangs die Konzentration von Diacetyl um mindestens 0,2 ppm ansteigt.

15. Verfahren nach irgendeinem der Ansprüche 10- 14, wobei während des Geschmacksproduktionsvorgangs die Konzentration von Acetaldehyd um mindestens 0,1 ppm ansteigt.

16. Verfahren nach irgendeinem der Ansprüche 10- 15, wobei die Laktat-Konzentration um mindestens 500 ppm während des Geschmacksproduktionsvorgangs ansteigt.

17. Verfahren nach irgendeinem der Ansprüche 10- 16, wobei der geschmacksproduzierende LAB-Stamm ein thermophiler LAB-Stamm ist, welcher eine optimale Wachstumstemperatur von mindestens 35°C, bevorzugt von mindestens 38 °C, hat.

18. Verfahren nach Anspruch 17, wobei der thermophile LAB-Stamm ausgewählt ist aus der Gruppe bestehend aus: *Streptococcus thermophilus, Lactobacillus delbrueckii, Lactobacillus helveticus, Lactobacillus acidophilus, Lactobacillus casei, Lactobacillus reuteri, Lactobacillus rhamnosus* und Kombinationen davon.

19. Verfahren nach irgendeinem der Ansprüche 10- 18, wobei der Geschmacksproduktionsvorgang eine Dauer von 2- 12 Stunden, bevorzugt von 3- 10 Stunden, hat.

## Revendications

1. Procédé d'élimination de mauvais arôme d'un substrat contenant une protéine de soja, ledit procédé comprenant une procédure de neutralisation qui comprend les étapes suivantes :
- de fourniture d'un liquide aqueux pasteurisé ou stérilisé contenant 0,5 - 8 % en masse de protéine de soja dissoute ;
- d'inoculation du liquide pasteurisé ou stérilisé avec une culture comprenant une souche de bactérie d'acide lactique (LAB) éliminant le mauvais arôme capable de métaboliser un n-alcanal en C₅-C₉ et/ou le trans-2-hexénal, ladite inoculation ayant éventuellement lieu après que ledit liquide pasteurisé ou stérilisé a été dans un premier temps fermenté avec un autre micro-organisme ;
- de fermentation du liquide aqueux inoculé par incubation à une température dans l'intervalle de 20 - 45°C pendant 0,4 - 6 heures ;
dans lequel moins de 600 ppm de lactate sont formés pendant ladite procédure de neutralisation ;
dans lequel la culture utilisée dans la procédure de neutralisation réduit la teneur d'au moins un n-alcanal en C₅-C₉ d'au moins 30 %, de préférence d'au moins 50 % lorsqu'un lait de soja neutre présentant une teneur en protéines de 2,5 % en masse est inoculé avec 10⁷ cellules viables de ladite culture par ml et incubé à 30°C pendant 4 h, à condition qu'avant l'inoculation les aldéhydes suivants ont été ajoutés dans les quantités indiquées : 2 ppm de n-pentanal, 2 ppm de n-hexanal, 2 ppm de n-heptanal et 2 ppm de n-octanal ;
dans lequel la souche LAB éliminant le mauvais arôme est une souche LAB mésophile présentant une température de croissance optimale dans l'intervalle de 25 - 37°C, ladite souche LAB mésophile étant choisie dans le groupe constitué de *Lactobacillus brevis, Lactobacillus fermentum, Lactobacillus sake, Lactobacillus sanfranciscensis, Lactobaccilus plantarum, Lactococcus lactis* sous-espèce *lactis, Lactococcus lactis* sous-espèce *cremoris, Leuconostoc mesenteroides, Leuconostoc cremoris, Leuconostoc lactis, Leuconostoc pseudomesenteroides* et des combinaisons de ceux-ci.

2. Procédé selon la revendication 1, dans lequel moins de 400 ppm de lactate sont formés pendant la procédure de neutralisation.

3. Procédé selon la revendication 1 ou 2, dans lequel moins de 0,2 ppm de diacétyle et moins de 0,2 ppm d'acétaldéhyde sont formés pendant la procédure de neutralisation.

4. Procédé selon l'une quelconque des revendications précédentes, dans lequel la durée de la procédure de neutralisation n'est pas supérieure à 5 heures, de préférence pas supérieure à 3 heures.

5. Procédé selon l'une quelconque des revendications précédentes, dans lequel pendant la procédure de neutralisation la concentration d'au moins un n-alcanal en C₅-C₉ diminue d'au moins 30 %, de préférence d'au moins 50 %.

6. Procédé selon l'une quelconque des revendications précédentes, dans lequel pendant la procédure de neutralisation la concentration de trans-2-hexénal diminue d'au moins 30 %, de préférence d'au moins 50 %.

7. Procédé selon l'une quelconque des revendications précédentes, dans lequel pendant la procédure de neutralisation la concentration de 2-méthylbutanal et/ou de 3-méthylbutanal diminue d'au moins 50 %.

8. Procédé selon la revendication 1, dans lequel la souche mésophile du gène *Lactobacillus* est choisie dans le groupe constitué de *Lactobacillus brevis, Lactobacillus fermentum, Lactobacillus sake, Lactobacillus sanfranciscensis,* et des combinaisons de ceux-ci.

9. Procédé selon la revendication 1, dans lequel la souche LAB mésophile est choisie dans le groupe constitué de *Lactobacillus fermentum, Lactobaccilus plantarum, Lactococcus lactis* sous-espèce *lactis, Lactococcus lactis* sous-espèce *cremoris, Leuconostoc mesenteroides, Leuconostoc cremoris, Leuconostoc lactis, Leuconostoc pseudomesenteroides* et des combinaisons de ceux-ci.

10. Procédé selon l'une quelconque des revendications précédentes, dans lequel la procédure de neutralisation est suivie par une procédure de production d'arôme comprenant :
- l'inoculation du liquide aqueux fermenté avec une culture comprenant une souche LAB produisant un arôme capable de produire du diacétyle et/ou de l'acétaldéhyde ;
- la fermentation supplémentaire du liquide aqueux fermenté par incubation à une température dans l'intervalle de 25 - 48°C pendant 1-24 heures ;
où dans lequel la procédure de neutralisation est précédée par une procédure de production d'arôme comprenant :
- l'inoculation du liquide aqueux pasteurisé ou stérilisé avec une culture comprenant une souche LAB produisant un arôme capable de produire du diacétyle et/ou de l'acétaldéhyde ;
- la fermentation du liquide aqueux par incubation à une température dans l'intervalle de 25 - 48°C pendant 1 - 24 heures.

11. Procédé selon la revendication 10, dans lequel la procédure de production d'arôme suit la procédure de neutralisation.

12. Procédé selon la revendication 10 ou 11, dans lequel la culture utilisée pendant la procédure de production d'arôme produit au moins 0,1 mg/l de diacétyle et/ou au moins 0,1 mg/l d'acétaldéhyde lorsqu'un lait de soja neutre présentant une teneur en protéine de 2,5 % en masse et contenant 2 % en masse de saccharose ajouté est inoculé avec 10⁷ cellules viables de ladite culture par ml et incubé à 43°C pendant 6 heures.

13. Procédé selon les revendications 10 - 12, dans lequel la procédure de production d'arôme utilise une incubation à une température dans l'intervalle de 35 - 50°C, de préférence de 38 - 48°C.

14. Procédé selon l'une quelconque des revendications 10 - 13, dans lequel pendant la procédure de production d'arôme, la concentration de diacétyle augmente d'au moins 0,2 ppm.

15. Procédé selon l'une quelconque des revendications 10 - 14, dans lequel pendant la procédure de production d'arôme, la concentration d'alcétaldéhyde augmente d'au moins 0,1 ppm.

16. Procédé selon l'une quelconque des revendications 10 - 15, dans lequel la concentration de lactate augmente d'au moins 500 ppm pendant la procédure de production d'arôme.

17. Procédé selon l'une quelconque des revendications 10 - 16, dans lequel la souche LAB produisant un arôme est une souche LAB thermophile présentant une température de croissance optimale d'au moins 35°C, de préférence d'au moins 38°C.

18. Procédé selon la revendication 17, dans lequel la souche LAB thermophile est choisie dans le groupe constitué de : *Streptococcus thermophilus, Lactobacillus delbrueckii, Lactobacillus helveticus, Lactobacillus acidophilus, Lactobacillus casei, Lactobaccilus reuteri, Lactococcus rhamnosus* et des combinaisons de ceux-ci.

19. Procédé selon l'une quelconque des revendications 10 - 18, dans lequel la procédure de production d'arôme présente une durée de 2 - 12 heures, de préférence de 3 - 10 heures.
